# EUROPEAN PATENT APPLICATION

(11) **EP 0 549 000 A1**
(43) Date of publication of application: **30.06.1993**
(21) Application number: 92201058.2
(22) Date of filing: 14.04.1992
(51) Int. Cl.: B23Q 15/14

(54) **Toolholder device for a machine adapted to work a rotating workpieces**

(30) Priority: 20.12.1991 IT TO911001
(71) Applicant: Sappa, Enrico, I-14033 Castell'Alfero (Asti) (IT)
(72) Inventor: Sappa, Enrico, I-14033 Castell'Alfero (Asti) (IT)
(74) Representative: Robba, Eugenio

(57) **Abstract**

The present invention relates to a toolholder device adapted for receiving tools for the polishing, finishing, cutting, designing, engraving, deforming and the path coding in machines for working metal articles, such as CN center lathes and vertical turning mills wherein the member (4) on which the tool (5, 5') is fastened is rotatable to a desired angle with respect to a C shaped bracket (1) integral with the lathe structure by means of a guide system, such guide system being further disengageable from said rotatable member (4) in order to allow for the interchangeability of the toolholder devices mounted in sequence on rotatable toolholder disks (13) or on toolholder slides (13').

## Description

The present invention relates to a device of the type of a toolholder head for lathes, trimmers, flanging machines, shears, etc., particularly used for manufacturing metal articles having various shape and size.

When realizing flat articles with various outline such as disks, ovals, trays, or tridimensional such as cups, vessels, tire rims for motor cars starting from a metal sheet, there are generally used machines on which a series of tools is mounted, each adapted for carrying out a single step of the overall working, from the cutting of the workpiece to the forming, deformation, flanging, engraving, polishing and finishing thereof.

In order to realize articles with simple curved outlines such as disks or ellipses, as well as articles having more complex and even unregular contours, there can be used cutting and finishing systems wherein the workpiece is rotated about an axis orthogonal to a guide along which such axis is movable. A suitable tool carried by an arm rest is operated by a transmission system in case of a shearing machine, or is simply carried along by the workpiece itself over which it rests during the movement thereof about the above mentioned axis of rotation in case of other workings, such as flanging or engraving.

On the contrary other arrangements provides for the rotation of the workpiece about a stationary axis and for a displacement which is orthogonal to the axis of rotation of the structure carrying the operating tool.

Moreover since as already mentioned each working step requires a specific tool various measures are to be taken to allow for an easy interchangeability of the tools and the supports thereof. More particularly there have been provided rota table disks with equally spaced radial seats for 6-8 toolholders that can engage such seats by means of pins urged by blocking means with fastening screws.

Such rotatable disks are positioned (with the tool for the desired working step in an operative position) by means of a mechanical or hydraulic system in a fixed position during the working step at the end of which they are rotated through a suitable angle in order to face the workpiece with the right tool.

While the above illustrated conventional toolholder means and therefore the tools mounted thereon, allow the execution of curved shapes and can follow the workpiece outline in the finishing steps, they have anyhow the shortcoming that the working surface of the tool, i.e. the one contacting the workpiece, during the workpiece rotation and the translation thereof along an axis orthogonal to the axis of rotation, lay in a constant position so that the result of the working is different depending upon the angle formed between the plane tangent to the workpiece surface at the working point and the plane tangent to the useful profile of the tool disk or roll.

In other words, since the optimally operating surface of the tool is limited and restricted to a particular portion of the tool, the best results are achieved by having the useful portion of the tool to contact the surface to be worked. Unfortunatly this is not always possible since when working on curved details the above illustrated conditions are met only for the case where the surface to be worked and the tool surface are parallel to each other.

The change of the working angle from an optimum condition where α=0 to critical situations where as α=40° results in edginess and defects in the body to be cut, flanged, deformed, engraved, polished and finished.

To obviate this inconvenience the tools have been mounted on rotatable supports provided with elastic means, wherein the tool position and the associated working angle are modified by the pressure of the workpiece during the rotation thereof.

However these systems proved to be defective both for what concerns their adjustment capability and for their lack of precision in case of irregularities of the path due to manufacturing defects of the workpiece since thei tool working angle depends upon the shape of the body they come in contact with.

More particularly these measures require deformable elastic means such as springs or pads having a different degree of elasticity according to the piece being worked, that may results in being either too deformable or too stiffen depending by the consistency of the article being worked at that moment.

The object of the present invention is that of providing a toolholder device for use in machines of the above mentioned kind that can be precisely positioned in a desired angular position and still provding the interchangeability of the tools that are mounted on the same toolholder structure.

The above and other objects are achieved by the toolholder device for a machine adapted to work rotating workpieces according to the invention which comprises means for the coupling to the toolholder structure of the machine and is characterized in that on said coupling means there is mounted a C shaped bracket extending outwardly of the toolholder structure, a supporting member is rotatably mounted in such bracket for receiving said tool either directly or through an interposed tool drive and/or control mechanism, and in that said rotatable supporting member can be rotated to any desired angular position by a motor driven guide system, with the angular position of said guide system being controlled by an electronic positioning device.

Additional characteristics and advantages of the invention will be better understood from the following description of a preferred but not exclusive embodiment of the device which is illustrated -only as a non limiting example-in the attached drawings, in which:
Fig. 1 is a perspective view of the toolholder device.
Fig. 2 is a perspective view of the toolholder device and of the guide shaft disengaged from each other.
Fig. 3 is a perspective view of the toolholder device and of the guide shaft coupled together.
Fig. 4 is a perspective view of the toolholder device mounted on a toolholder disk and of the associated guide and control system in a (not shown) center lathe.
Fig. 5 is a perspective view of a series of toolholder devices engaged by a toolholder slide and of the associated guide and control system in a vertical turning mill.
Fig. 6 is a diagram illustrating the behaviour of the tool which is cantilever mounted on the toolholder device during the working of an article with an elliptic cross section.

With reference to the attached Figures, the device of the invention comprises a C shaped bracket 1 having a middle extension 2 opposed to the portion of the C shaped bracket 1 receiving the tool and provided with a triangular reinforcement block 3. The middle extension 2 is designed in such a manner as to fit into one of the slots or seats 14 provided either in the toolholder disk or in the toolholder slide 13'.

A hollow structural member 4 is rotatably housed within such C shaped bracket 1 which is adapted to allow the inside fastening of the tool 5 or the outside fastening of the tool 5' in a cantilever fashion, pivoted on the free side walls 18A of such hollow structural member 4. Such hollow structural member 4 has a first rest pivot (not shown) with respect to the base of the C shaped bracket 1, and a second control pivot 7 passing through a hole in the side of the C shaped bracket 1 which is opposed to the base of the C shaped bracket 1 on which the first rest pivot abuts. The control pivot 7 is further provided with a middle groove or notch 8 in the base of its free end that is adapted to engage a projection 10 in the drive shaft 9 that is rotated by the reduction unit 20 transmitting the motion from the motor 18 to the shaft 9.

Control pivot 7 is further provided with a radial projection 22 extending towards the back of the C shaped bracket 1 and adapted to contact and actuate two limit sensors 23 and 24 placed on said upper portion of the C shaped bracket 1 and diametrally opposed with respect to the control pivot.

A dovetail section 16 is located on the unit 15 controlling the toolholder disk 13 or on unit 15' controlling the toolholder slide 13', slidably inserted within a complementarily shaped section 17 carrying the electric motor 18. A suitable hydraulic piston 21 located rearwardly to the motor 18 positions the section 17 at the desired distance along the dovetail section 16 with respect to the toolholder disk in the case of the unit 15 for center (engine) lathes, or with respect to the toolholder slide 13' in the case of the unit 15' for vertical turning mills.

A reduction unit 20 is mounted in front of the motor 18 and carried by the same section 17, the unit being driven into rotation by the motor 18, and provided with a shaft 9 having the middle projection 10 on its free base.

When starting a working cycle with the selected tool the positioning hydraulic piston 21 is advanced until the shaft 9 is aligned with the control pivot 7 and the projection 10 can move into the slot 8 extending on the base of the free end of the control pivot 7. At this time, during the working of the piece, motor 18 is energized to command the angular positioning of the tool in accordance with a path that can be programmed through a proper electronic control system, while a set of position sensors 24 transmits the precise angular position of the shaft 9, and therefore of the pivot 7, to an electronic control unit (not shown).

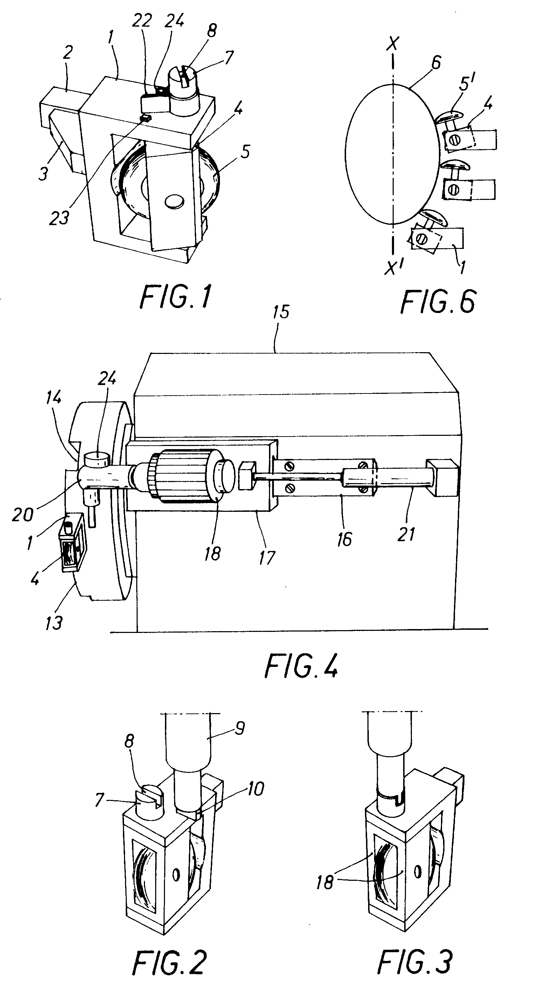

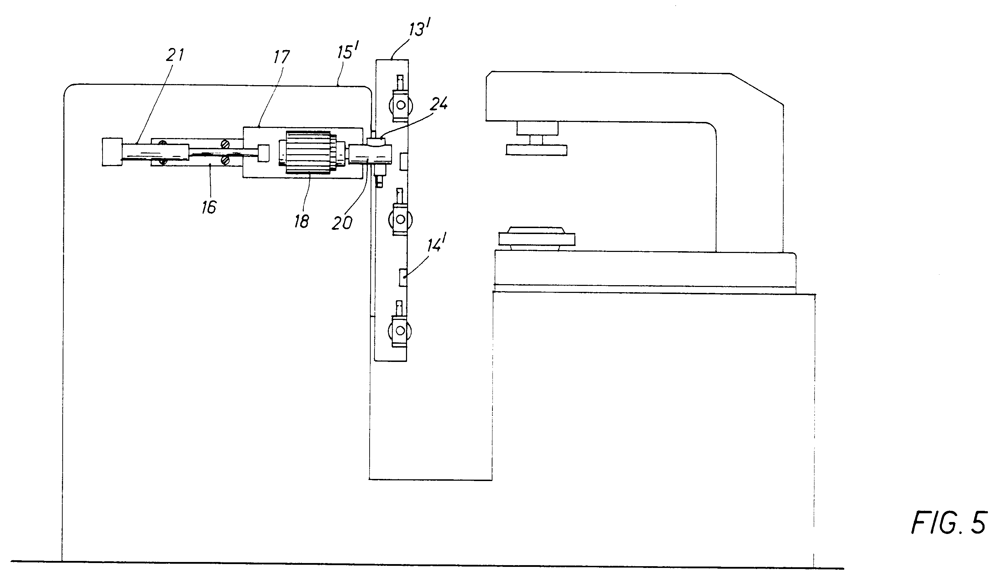

With reference to Fig. 6 when the workpiece 6 is being worked a rotation can be imparted to the member 4 carrying the presently operating tool 5', this being an additional movement with respect to the conventional ones allowed by the known machines. At the same time with the relative advancing along axis X-X of the workpiece 6 with respect to the tool 5', the tool can be adjusted with respect to a change of the angle formed between the surfaces of the tool 5' and the workpiece 6, so that the optimum working plane of the tool is constantely maintained parallel to the plane tangent to the workpiece surface which is being worked.

## Claims

1. A toolholder device for a machine adapted to work rotating workpieces comprising means for the coupling to the toolholder structure of the machine, characterized in that on said coupling means there is mounted a C shaped bracket extending outwardly of the toolholder structure, a supporting member is rotatably mounted in such bracket for receiving said tool either directly or through an interposed tool drive and/or control mechanism, and in that said rotatable supporting member can be rotated to any desired angular position by a motor driven guide system, with the angular position of said guide system being controlled by an electronic positioning device.

2. A toolholder device as claimed in claim 1, characterized in that said rotatable supporting member is mounted on the C shaped bracket through a first rest pivot and a second control pivot, said first pivot being fastened to the rotatable supporting member and pivoted on the base of the C shaped bracket, said second pivot being fastened to the rotatable supporting member passing through a hole in the upper portion of the C shaped bracket and extending upwardly, this latter pivot♢ further being provided with a middle slot on its free face.

3. A toolholder device as claimed in claim 1, characterized in that said motor driven system comprises a motor, a reduction gear and a rotatable shaft having a middle projection on its free end adapted to engage said middle slot of the free end of the control pivot of the rotatable member supporting the tool.

4. A toolholder device as claimed in claim 3, characterized in that said motor driven guide system is carried by a slide for shifting the guide system towards or away from the toolholder structure for the selection of the proper desired toolholder device through the simultaneous shift of the fixed toolholder structure.

5. A toolholder device as claimed in claim 3, characterized in that said electronic control device of the angular position of the guide system comprises a position coder adapted to transmit data relating to the rotation angle of the guide shaft to a suitable electronic control unit.

6. A toolholder device as claimed in claim 2, characterized in that said second control pivot is provided with a radial extension in the portion projecting above the C shaped bracket, said extension being adapted to activate two limit sensors placed on the upper surface of the C shaped bracket and diametrally opposed with respect to the control pivot, when reaching the maximum angular displacement.

7. A toolholder device as claimed in claim 3, characterized in that between the rotatable supporting member and the C shaped bracket there is interposed a stop resilient means adapted to prevent the movement of said rotatable support from its rest position when the guide shaft is disengaged from the motor driven guide system.

8. A toolholder device as claimed in claim 1, characterized in that the C shaped bracket housing the rotatable supporting member is designed for allowing the rotation of said rotatable member equipped with a tool by about 45° to the left and by as many degrees to the right of the middle stop position thereof, with an overall allowed angular displacement of 90°.

9. A toolholder device as claimed in claim 1, characterized in that the rotatable supporting member is shaped so as to receive the tool either inside or laterally outside.
